# EUROPÄISCHE PATENTSCHRIFT

(11) **EP 0 548 480 B1**
(45) Veröffentlichungstag und Bekanntmachung des Hinweises auf die Patenterteilung: **11.01.1995**
(21) Anmeldenummer: 92117042.9
(22) Anmeldetag: 06.10.1992
(51) Int. Cl.: F24F 5/00, F24D 3/16, E04B 9/36, E04B 9/06

(54) **Kühldecke**
Cooled ceiling
Plafond refroidi

(30) Priorität: 24.12.1991 DE 9116027 U
(43) Veröffentlichungstag der Anmeldung: 30.06.1993
(73) Patentinhaber: Hewing GmbH, D-48607 Ochtrup (DE)
(72) Erfinder: Wittkämper, Michael, W-4630 Bochum 6 (DE); Homm, Karl-Georg, W-4370 Marl-Polsum (DE)
(74) Vertreter: Busse & Busse Patentanwälte

(56) Entgegenhaltungen:
- US-A- 3 516 486

## Beschreibung

Die Erfindung betrifft eine Kühldecke zur Raumluftklimatisierung, mit einem von Kühlwasser durchströmten Rohrsystem, nach dem Oberbegriff des Anspruchs 1.

Bei bekannten Kühldecken (DE 39 21 719 A1) sind die das Wärmetauscherelement bildenden Rohre in einer Profilschiene eingelegt, die an ihrer zur Rohdecke gerichteten Seite über eine Lagerschiene, einen Längsträger und eine Abhängestrebe von der Rohdecke abgehängt ist und an der Unterseite mit als Deckenverkleidungselement ausgebildeten Platten über Magnete verbunden ist. Diese Konstruktion baut aufwendig und ist hinsichtlich des Wärmeüberganges von den das Kühlmittel führenden Rohren zu den Deckenelementen problematisch.

Der Erfindung liegt die Aufgabe zugrunde, eine Kühldecke zur Raumluftklimatisierung der angegebenen Art zu schaffen, die besonders einfach ist, leicht montiert und demontiert werden kann und dabei einen sicheren Wärmeübergang zwischen den Deckenelementen und den Kühlrohren gewährleistet.

Ausgehend von einer Kühldecke nach dem Oberbegriff des Anspruch 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 19 verwiesen.

Die erfindungsgemäße Ausgestaltung der Kühldecke erbringt mit geringem Aufwand eine gute Wärmeleitung durch direkten Kontakt zwischen den Deckenelementen und den Kühlrohren, der zuverlässig dadurch erreicht wird, daß die in die Formausnehmungen des Rastträgers eingeclipsten Kühlwasserrohrbereiche mit den Deckenelementen unter elastischer Vorspannung in Zwangskontakt stehen. Dabei sind die Kühlwasserrohre und die Deckenelemente ohne zusätzliche Hilfsmittel leicht von unten in den von der Decke abgehängten Rastträger einrastbar, so daß mit geringem Montageaufwand nicht nur eine schnelle Erstmontage, sondern auch auf einfache Weise wiederholte Zugriffe auf das Rohrsystem möglich sind. Auch ist ein nachträglicher Einbau einer derartigen Kühldecke mit dekorativen Deckenelementen in Gebäude auf besonders einfache Weise möglich.

Weitere Einzelheiten und Vorteile der Erfindung ergeben sich aus der nachfolgenden Beschreibung und der Zeichnung, die ein Ausführungsbeispiel eines erfindungsgemäßen Wärmetauschers schematisch veranschaulicht. In der Zeichnung:
- Fig. 1: eine teilweise geschnittene Ausschnittsdarstellung einer Kühldecke nach der Erfindung mit Rastträger,
- Fig. 2: eine teilweise geschnittene Einzeldarstellung des Rastträgers gemäß Fig. 1,
- Fig. 3: eine Seitenansicht des Rastträgers gemäß Fig. 2,
- Fig. 4: eine vergrößerte Einzeldarstellung einer Formausnehmung zur Aufnahme eines Kühlrohres am Rastträger gemäß Fig. 2,
- Fig. 5: eine Prinzipdarstellung einer weiteren Ausführungsform eines Rastträgers ähnlich Fig. 2 und
- Fig. 6: eine Prinzipdarstellung eines mäanderförmig, auf mehreren Deckenelementen verlegten Rohrsystems.

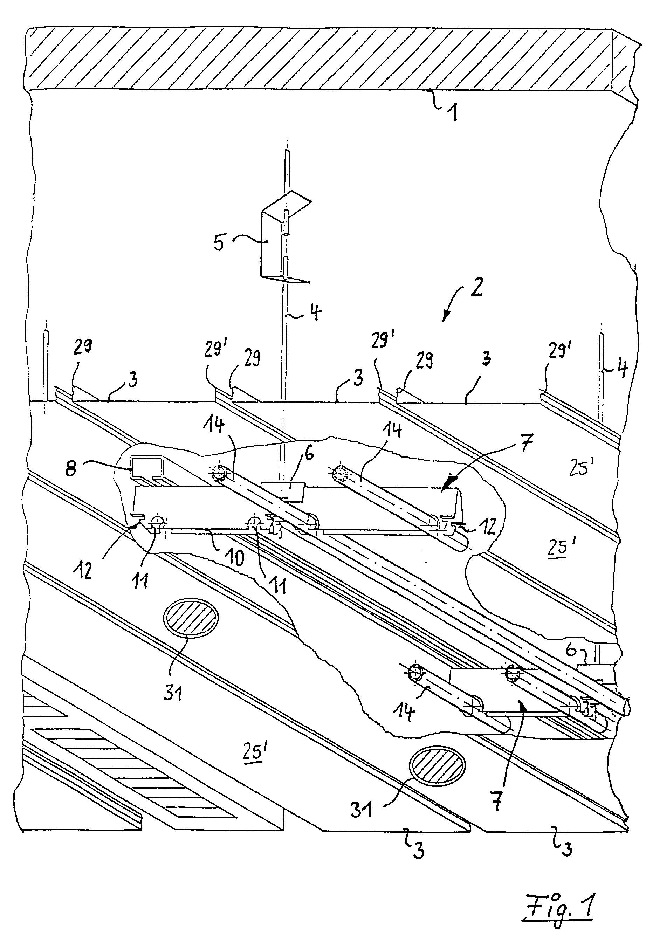

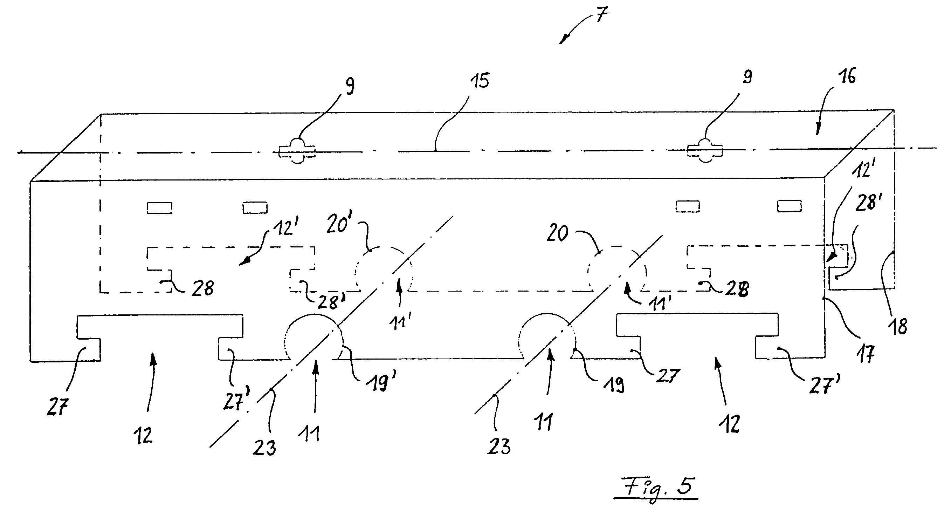

In Fig. 1 ist in einer perspektivischen Ansicht auf eine Rohdecke 1 eine von dieser abgehängte, insgesamt mit 2 bezeichnete Kühldecke dargestellt, deren Deckenelemente 3 von Paneelen gebildet sind und gemeinsam eine Deckenverkleidung bilden, die ein Kühlrohrsystem optisch verdeckt. An der Rohdecke 1 sind dabei Abhängeträger 4 mit einem eine Höheneinstellung ermöglichenden Zwischenglied 5 vorgesehen, die im unteren Endbereich über ein Verbindungsglied 6 mit Rastträgern 7 verbunden sind. Die Rastträger 7 können dabei zusätzlich an zumindst einem Längsträger 8 über eine Befestigungsöffnung 9 (Fig. 5) durchgreifende Verbindungsmittel (nicht dargestellt) gehalten sein.

Jeder Rastträger 7 ist in seinem unteren Randbereich 10 mit Formausnehmungen 11,11' und 12,12' versehen. Die Formausnehmungen 11,11' dienen zur Aufnahme eines Kühlrohres 14 und sind an dessen Querschnitt angepaßt, und die Formausnehmungen 12,12' sind zur Festlegung der Deckenelemente 3 bestimmt. Bei der dargestellten Ausführungsform sind die Rasttäger 7 in Form und Länge derart gestaltet, daß jeweils vier Kühlrohre 14 und zwei Deckenelemente 3 in den jeweiligen Formausnehmungen festlegbar sind.

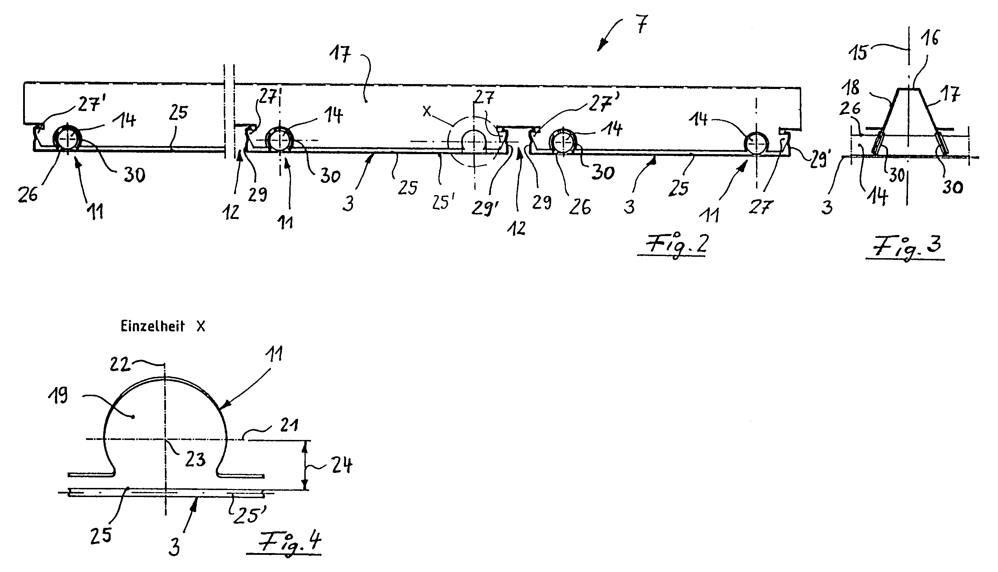

In Fig. 2 und Fig. 3 ist der erfindungsgemäße Rastträger 7 in einer Einzeldarstellung mit den Deckenlementen 3 und den Kühlrohren 14 in Einbaulage veranschaulicht. In der dargestellten vorteilhaften Ausführungsform besteht der Rastträger 7 aus einem einstückigen, zu einer vertikalen Profillängsebene 15 symmetrischen Profilblech mit einer im wesentlichen U-förmigen Querschnittsform, die einen oberen Basisschenkel 16 und zwei von diesem randseitig abwärts abgebogene Halteschenkel 17, 18 mit den Formausnehmungen 11,11' bzw. 12,12' umfaßt.

Die Formausnehmungen 11,11' für die Kühlrohre 14 sind dabei in den Halteschenkeln 17,18 als jeweils paarweise symmetrisch zur Profillängsebene 15 gegenüberliegende, in der dargestellten Einbaulage des Rastträgers 7 nach unten offene Kreissegmente 19,20 bzw. 19',20' (Fig. 5) ausgebildet.

Die vergrößerte Einzeldarstellung gemäß Fig. 4 verdeutlicht, daß die Formausnehmungen 11,11' im Schnittpunkt einer horizontalen Verlegeebene 21 und einer vertikalen Verlegeebene 22 für das jeweilige Kühlrohr 14 eine Verlegeachse 23 aufweisen, deren vertikaler Abstand 24 zur Innenfläche 25 des jeweiligen Deckenelementes 3 in der dargestellten Einbaulage der Deckenelemente 3 gemäß Fig. 2 für die beabsichtigte Kühlwirkung der Kühldecke 2 von Bedeutung ist. Denn der Umriß 26 des in eine Formausnehmung 11,11' eingerasteten Kühlrohres 14 soll in eine Ebene 25' herabreichen, die geringfügig tiefer gelegen ist als die von der Innenfläche 25 eines vorspannungsfrei mit dem Rastträger 7 verbundenen Deckenelemente 3 eingenomnene Ebene. Damit ist erreicht, daß der plattenförmige Innenflächenbereich 25 des bzw. der Deckenelemente 3 unter elastischer Vorspannung mit der Unterseite des bzw. der Kühlrohre 14 in Berühungsreingriff steht (Fig. 2, Fig. 3).

Die Formausnehmungen 12,12' für die Deckenelemente 3 sind mit jeweils paarweise symmetrisch zur Profillängsebene 15 gegenüberliegenden, in der jeweiligen Ebene der Halteschenkel 17,18 belassenen Rastnasen 27,28 bzw. 27',28' ausgebildet, von denen jeweils zwei in entgegengesetzte Richtung weisende Rastnasenpaare 27,27' bzw. 28,28' für eine Verbindung mit einem Deckenelement 3 vorgesehen sind (Fig. 2).

Zweckmäßig sind die Formausnehmungspaare 19,20 bzw. 19',20' für die Kühlrohre 14 jeweils im Nahbereich der Rastnasen 27,28 bzw. 27',28' angeordnet, so daß der Bereich elastische Vorspannung zwischen Kühlrohr 14 und Deckenelement 3 nahe der Abstützung jeweils abgekanteter Seitenflansche 29,29' des Deckenelements 3 gelegen ist.

Bei der Ausführung des Rastträgers 7 gemäß Fig. 2 und Fig. 3 ist in den Formausnehmungen 11,11' für die Kühlrohre 14 jeweils ein elastisches, die Formausnehmungsränder (Fig. 4) der Kreissegmente 19,20 bzw. 19',20' umgreifendes Einsatzteil 30 vorgesehen. In der Einbaulage der Kühlrohre 14 umfaßt dieses Einsatzteil 30 die eingerasteten Kühlrohre 14 derart, daß auch bei dieser Ausführung die Umrisse in eine Ebene 25' herabreichen, die geringfügig tiefer gelegen ist als die jeweils von den plattenförmigen Innenflächenbereichen 25 vorspannungsfrei mit dem Rastträger 7 verbundenen Deckenelementen 3 eingenommene Ebene. Die Einsatzteile 30 schützen im Bereich des Randes des jeweiligen Kreissegments 19,20 bzw. 19',20' die Kühlrohre 14 vor unerwünschten Schneid- und/oder Kerbbelastungen.

Bei der zweckmäßigen Hintereinanderanordnung von mehreren, parallel zueinander verlaufenden Rastträgern 7 (Fig. 1) sind diese durch den gemeinsamen Längsträger 8 so ausgerichtet und fixiert, daß die Kühlrohre 14 eine präzise Betriebslage einnehmen und die zugeordneten Deckenelemente 3 einen optisch gleichmäßigen, dekorativen Gesamteindruck darbieten.

Die Festlegung der Deckenelemente 3 an den jeweiligen Rastträgern 7 kann so gestaltet sein, daß die Seitenflansche 29,29' nahe benachbart sind und damit der Eindruck einer optischen Geschlossenheit der Zwischendecke erzielt wird.

In den Deckenelementen 3 gemäß Fig. 1 sind bereichsweise Durchgangsöffnungen 31 eingebracht, mit denen ein gezielter Luftaustausch erreichbar ist. In solche Durchgangsöffnungen 31 können gegebenenfalls auch Beleuchtungskörper oder dgl. eingesetzt werden.

Anstelle einzelner größerer Durchgangsöffnungen 31 können einzelne, mehrere oder alle Deckenelemente 3 mit einer sowohl optisch als akustisch oder für den Wärmeaustausch günstigen Feinperforation versehen sein (nicht dargestellt).

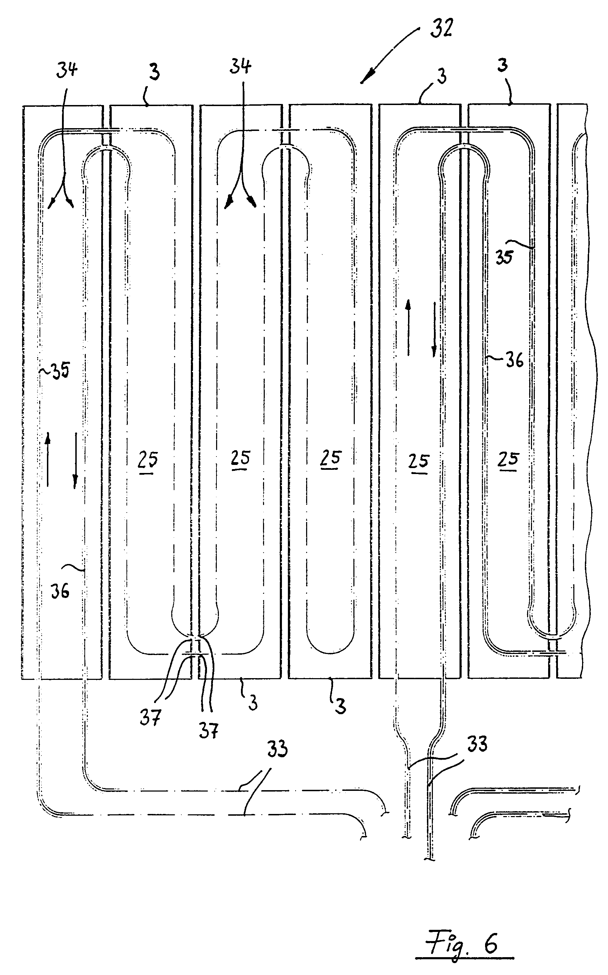

In Fig. 6 ist in einer schematischen Draufsicht ein die Kühldecke 2 bildendes Rohrsystem 32 dargestellt, das mehrere, von mäanderförmig geführten Rohren 33 aus z.B. Kunststoff gebildete Verlegeabschnitte 34 aufweist, wobei ein Vorlaufast 35 und ein Rücklaufast 36 jeder Verlegeschleife im Bereich jedes Deckenelementes 3 im wesentlichen parallel verlaufen.

Die Verlegeabschnitte 34 des Rohrsystems 32 können auch von spiral- oder schneckenförmig verlegten Rohren 33 gebildet sein (nicht dargestellt). Auch eine bifilare Verlegung der Kunststoffrohre 33 ist möglich.

Die Deckenelemente 3 in Fig. 6 weisen federnde Seitenflansche 29,29' auf, in denen Formausnehmungen 37 vorgesehen sind, durch die die Übergangsbereiche der Rohrschleifen eines Rohrabschnittes 34 hindurchführbar sind.

## Patentansprüche

1. Kühldecke zur Raumluftklimatsierung, mit einem von Kühlwasser durchströmten Rohrsystem (32), das zumindest bereichsweise zwischen der Rohdecke (1) eines Gebäudes und durch Träger (4,8) abgehängten Deckenelementen (3) vorgesehen und über ein mit einem der Träger (4) und den Deckenelementen (3) verbundenes Halteglied in Einbaulage gehalten ist, **dadurch gekennzeichnet,** daß das Halteglied als zumindest einen Bereich eines Kühlrohres (14) und zumindest ein Deckenelement (3) in jeweiligen Formausnehmungen (11,11';12,12') im Unteren Randbereich festlegender Rastträger (7) ausgebildet ist, wobei die Formausnehmungen (11,11';12,12') einander derart zugeordnet sind, daß der plattenförmige Innenflächenbereich (25) des bzw. der Deckenelemente (3) unter elastischer Vorspannung mit der Unterseite des bzw. der Kühlrohre (14) in Berührungseingriff steht.

2. Kühldecke nach Anspruch 1, dadurch gekennzeichnet, daß an einem Rastträger (7) mehrere Kühlwasserrohrbereiche (13) und mehrere Deckenelemente (3) festlegbar sind.

3. Kühldecke nach Anspruch 1 oder 2, dadurch gekennzeichnet, daß der Rastträger (7) aus einem einstückigen, zu einer vertikalen Profillängsebene (15) symmetrischen Profilblech mit einer im wesentlichen U-förmigen Querschnittsform besteht, die einen oberen Basisschenkel (16) und zwei von diesem randseitig abwärts abgebogene, die Formausnehmungen (11,11';12,12') aufweisende Halteschenkel (17,18) umfaßt.

4. Kühldecke nach Anspruch 3, dadurch gekennzeichnet, daß der Rastträger (7) im Bereich des Basisschenkels (16) in der Profillängsebene (15) im Abstand ausgeformte Befestigungsöffnungen (9) aufweist.

5. Kühldecke nach Anspruch 3 oder 4, dadurch gekennzeichnet, daß die Formausnehmungen (11,11') für die Kühlrohre (14) in den Halteschenkeln (17,18) als jeweils paarweise symmetrisch zur Profillängsebene (15) gegenüberliegende, in Einbaulage des Rastträgers (7) nach unten offene Kreissegmente (19,20;19',20') ausgebildet sind.

6. Kühldecke nach Anspruch 5, dadurch gekennzeichnet, daß je zwei oder mehrere Kreissegmentpaare (19,20;19',20') dem plattenförmigen Innenflächenbereich (25) jeden Deckenelementes (3) zugeordnet sind.

7. Kühldecke nach einem der Ansprüche 3 bis 6, dadurch gekennzeichnet, daß die Formausnehmungen (12,12') für die Deckenelemente (3) mit jeweils paarweise symmetrisch zur Profillängsebene (15) gegenüberliegenden, in der jeweiligen Halteschenkelebene belassenen Rastnasen (27,28;27',28') ausgebildet sind, von denen jeweils zwei in entgegengesetzter Richtung weisende Rastnasenpaare (27,27';28,28') für eine Verbindung mit einem Deckenelement (3) vorgesehen sind.

8. Kühldecke nach Anspruch 6 und 7, dadurch gekennzeichnet, daß die Formausnehmungspaare (19,20;19',20') für die Kühlrohre (14) jeweils im Nahbereich der Rastnasen (27,28;27',28') angeordnet sind.

9. Kühldecke nach einem der Ansprüche 1 bis 8, dadurch gekennzeichnet, daß in den Kreissegmenten (19,20;19',20') der Halteschenkel (17,18) jeweils ein elastisches, die Formausnehmungsränder umgreifendes, in Einbaulage die Kühlrohre (14) zumindest bereichsweise umfassendes Einsatzteil (30) vorgesehen ist.

10. Kühldecke nach einem der Ansprüche 1 bis 9, dadurch gekennzeichnet, daß die Umrißlinien (26) der in ihre Formausnehmungen (19,20;19',20') eingerasteten Rohre (14) in eine Ebene herabreichen, die geringfügig tiefer gelegen ist als die jeweils von den plattenförmigen Innenflächenbereichen (25) der vorspannungsfrei mit dem Rastträger (7,7') verbundenen Deckenelementen (3) eingenommene Ebene.

11. Kühldecke nach einem der Ansprüche 1 bis 10, dadurch gekennzeichnet, daß mehrere parallel zueinander verlaufende, fluchtend hintereinander angeordnete Rastträger (7) durch zumindest einen gemeinsamen Längsträger (8) ausgerichtet und fixiert sind.

12. Kühldecke nach Anspruch 11, dadurch gekennzeichnet, daß die Längsträger (8) ihrerseits zur Rohdecke (1) hin abgehängt sind.

13. Kühldecke nach einem der Ansprüche 1 bis 12, dadurch gekennzeichnet, daß die Deckenelemente (3) mit aneinanderliegenden Längsrandkanten (29,29') eine geschlossene Fläche bilden.

14. Kühldecke nach einem der Ansprüche 1 bis 13, dadurch gekennzeichnet, daß die Deckenelemente (3) im plattenförmigen Bereich (25) Durchgangsöffnungen (31) aufweisen.

15. Kühldecke nach Anspruch 14, dadurch gekennzeichnet, daß die Durchgangsöffnungen (31) eine Feinperforation bilden.

16. Kühldecke nach einem der Ansprüche 1 bis 15, dadurch gekennzeichnet, daß das Rohrsystem (32) von zumindest einem eine elastische äußere Mantelfläche aufweisenden Kunststoffrohr (33) gebildet ist.

17. Kühldecke nach einem der Ansprüche 1 bis 16, dadurch gekennzeichnet, daß das Rohrsystem (32) mäanderförmige, spiralförmige, schneckenförmige oder bifilare Verlegeabschnitte (34) aufweist.

18. Kühldecke nach einem der Ansprüche 1 bis 16, dadurch gekennzeichnet, daß die Abschnitte (34) geradlinig ausgeführt und sich über ein Deckenelement (3) bzw. mehrere fluchtend hintereinander angeordnete Deckenelemente (3) erstrecken, wobei der Vor- und Rücklaufast (35,36) jeder Verlegeschleife zueinander im wesentlichen parallel verlaufen.

19. Kühldecke nach einem der Ansprüche 1 bis 18, dadurch gekennzeichnet, daß die Deckenelemente (3) im Bereich der Längsrandkanten (29,29') die Bogenbereiche des Rohrsystems (32) aufnehmende, in der Einbaulage einander zugeordnete Ausnehmungen (37) aufweisen.

## Claims

1. A cooling ceiling for room air conditioning with a system (32) of pipes through which cooling water flows and at least portions of which are provided between the bare ceiling (1) of a building and ceiling elements (3) suspended by joists (4, 8) and held in the installed position by a holding member connected to one of the joists (4) and the ceiling elements (3), characterised in that the holding member is constructed as a retaining joist (7) the lower marginal portion of which locks at least one part of a cooling pipe (14) and at least one ceiling element (3) in respective shaped recesses (11 , 11'; 12, 12'), whereby the shaped recesses (11, 11'; 12, 12') are so associated with one another that the panel-shaped interior surface area (25) of the ceiling element(s) (3) is in contacting engagement with the underside of the cooling pipe(s) (14) with resilient initial tension.

2. A cooling ceiling according to Claim 1, characterised in that a plurality of cooling water pipe portions (13) and a plurality of ceiling elements (3) can be fixed on one retaining joist (7).

3. A cooling ceiling according to Claim 1 or 2, characterised in that the retaining joist (7) consists of a one-piece profiled plate of substantially U-shaped cross-section symmetrical with a vertical longitudinal profile plane (15) and which comprises an upper base web (16) and two holding flanges (17, 18) comprising the shaped recesses (11, 11'; 12, 12') bent downwardly from the sides thereof.

4. A cooling ceiling according to Claim 3, characterised in that the retaining joist (7) comprises in the area of the base web (16) fixing apertures (9) formed at intervals from one another in the longitudinal plane (15) of the profile.

5. A cooling ceiling according to Claim 3 or 4, characterised in that the shaped recesses (11, 11') for the cooling pipes (14) are constructed in the holding flanges (17, 18) as pairwisely disposed segments (19, 20; 19', 20') of a circle which in the installed position of the retaining joist (7) are opposite one another symmetrically to the longitudinal plane (15) of the profile and are open at the bottom.

6. A cooling ceiling according to Claim 5, characterised in that in each case two or more pairs of segments of a circle (19, 20; 19', 20') are associated with the panel-shaped interior surface area (25) of each ceiling element (3).

7. A cooling ceiling according to one of Claims 3 to 6, characterised in that the shaped recesses (12, 12') for the ceiling elements (3) are constructed with in each case detents (27, 28; 27', 28') which are left in the plane of the respective holding flange and which are opposite one another in pairs symmetrically in relation to the longitudinal plane (15) of the profile and of which in each case two pairs of detents (27, 27'; 28, 28') pointing in opposite directions are provided for connection to the ceiling element (3).

8. A cooling ceiling according to Claims 6 and 7, characterised in that the pairs of shaped recesses (19, 20; 19', 20') for the cooling pipes (14) are in each case disposed in close vicinity of the detents (27, 28; 27', 28').

9. A cooling ceiling according to one of Claims 1 to 8, characterised in that in the segments (19, 20; 19', 20') of a circle in the holding flanges (17, 18) there is at least one resilient inserted part (30) engaging around the edges of the shaped recess and enclosing at least parts of the cooling pipes (14) when they are in their installed position.

10. A cooling ceiling according to one of Claims 1 to 9, characterised in that the outlines (26) of the pipes (14) held in their shaped recesses (19, 20; 19', 20') extend down into a plane which is slightly lower than the plane occupied by the panel-like interior surfaces (25) of the ceiling elements (3) which are connected to the retaining joist (7, 7') without initial tension.

11. A cooling ceiling according to one of Claims 1 to 10, characterised in that a plurality of mutually parallel retaining joists (7) disposed serially and in alignment are orientated and fixed by at least one common longitudinal joist (8).

12. A cooling ceiling according to Claim 11, characterised in that the longitudinal joists (8) are in turn suspended from the direction of the bare ceiling (1).

13. A cooling ceiling according to one of Claims 1 to 12, characterised in that by their longitudinal marginal edges (29, 29') which bear one against another the ceiling elements (3) form one closed area.

14. A cooling ceiling according to one of Claims 1 to 13, characterised in that the ceiling elements (3) comprise ports (31) in the panel-like area (25).

15. A cooling ceiling according to Claim 14, characterised in that the ports (31) constitute a fine perforation.

16. A cooling ceiling according to one of Claims 1 to 15, characterised in that the system (32) of pipes comprises at least one synthetic plastics pipe (33) having a flexible outer surface.

17. A cooling ceiling according to one of Claims 1 to 16, characterised in that the system (32) of pipes comprises meandering spiral serpentine or bifilar installed portions (34).

18. A cooling ceiling according to one of Claims 1 to 16, characterised in that the portions (34) are rectilinear and extend over one ceiling element (3) or a plurality of serially aligned ceiling elements (3) whereby the forward and return branches (35, 36) of each installed loop extend substantially parallel.

19. A cooling ceiling according to one of Claims 1 to 18, characterised in that in the region of the longitudinal marginal edges (29, 29') the ceiling elements (3) comprise recesses (37) associated with one another when installed and which accommodate the curved parts of the pipe system (32).

## Revendications

1. Plafond refroidi destiné à la climatisation de l'air intérieur, avec un système de tuyaux (32) dans lequel circule de l'eau de refroidissement, prévu, tout au moins pour certaines parties, entre le plafond brut (1) d'un bâtiment et des éléments de plafond (3) suspendus par des supports (4, 8), et maintenu en place par l'intermédiaire d'un élément de maintien relié à l'un des supports (4) et aux éléments de plafond (3), caractérisé en ce que l'élément de maintien est réalisé sous la forme d'une poutre à encliquetage (7) qui fixe au moins une partie d'un tuyau de refroidissement (14) et au moins un élément de plafond (3) dans des échancrures (11, 11'; 12, 12') correspondantes dans la partie marginale inférieure, les échancrures (11, 11'; 12, 12') correspondant l'une à l'autre de telle façon que la partie (25) de la surface intérieure en forme de plaque de l'élément de plafond ou des éléments de plafond (3) soit en prise avec contact, sous précontrainte élastique, avec le côté inférieur du ou des tuyaux de refroidissement (14).

2. Plafond refroidi, suivant la revendication 1, caractérisé en ce que plusieurs zones (13) de tuyaux à eau de refroidissement et plusieurs éléments de plafond (3) peuvent être fixés à une poutre à encliquetage (7).

3. Plafond refroidi, suivant la revendication 1 ou 2, caractérisé en ce que la poutre à encliquetage (7) est constituée par une tôle profilée d'une pièce, symétrique par rapport à un plan longitudinal vertical (15) du profilé, dont la section est sensiblement en forme de U et comprend une aile de base supérieure (16) et deux ailes de maintien (17, 18) qui sont pliées vers le bas depuis les bords de l'aile de base et qui comprennent les échancrures (11, 11'; 12, 12').

4. Plafond refroidi, suivant la revendication 3, caractérisé en ce que la poutre à encliquetage (7) présente dans la région de l'aile de base (16), dans le plan longitudinal (15) du profilé, des ouvertures de fixation (9) ménagées à certains intervalles.

5. Plafond refroidi, suivant la revendication 3 ou 4, caractérisé en ce que les échancrures (11, 11') destinées aux tuyaux de refroidissement (14), dans les ailes de maintien (17, 18), sont réalisées sous la forme de segments de cercle (19, 20; 19', 20') ouverts vers le bas quand la poutre à encliquetage (7) est en place, situés face à face et symétriques par paires par rapport au plan longitudinal (15) du profilé.

6. Plafond refroidi, suivant la revendication 5, caractérisé en ce que deux paires ou plus de deux paires de segments de cercle (19, 20; 19', 20') sont affectées à la partie (25) de la surface intérieure en forme de plaque de chaque élément de plafond (3).

7. Plafond refroidi, suivant l'une quelconque des revendications 3 à 6, caractérisé en ce que les échancrures (12, 12') destinées aux éléments de plafond (3) sont réalisées avec des talons d'appui (27, 28; 27', 28') situés face à face, symétriques par paires par rapport au plan longitudinal (15) du profilé, laissés dans le plan de l'aile de maintien correspondante, deux paires de talons d'appui (27, 27'; 28, 28') dirigés en sens opposés servant chaque fois à établir une fixation à un élément de plafond (3).

8. Plafond refroidi, suivant les revendications 6 et 7, caractérisé en ce que les paires d'échancrures (19, 20; 19', 20') destinées aux tuyaux de refroidissement (14) sont placées chacune près des talons d'appui (27, 28; 27', 28').

9. Plafond refroidi, suivant l'une quelconque des revendications 1 à 8, caractérisé en ce qu'une pièce de garniture élastique (30), enserrant chaque fois les bords des échancrures dans les segments de cercle (19, 20; 19', 20') des ailes de maintien (17, 18) et entourant les tuyaux de refroidissement (14) au moins pour certaines parties lorsque ceux-ci sont en place, est prévue.

10. Plafond refroidi, suivant l'une quelconque des revendications 1 à 9, caractérisé en ce que les contours (26) des tuyaux (14) encliquetés dans les échancrures (19, 20; 19', 20') descendent jusque dans un plan qui est situé légèrement plus bas que le plan occupé par les parties (25) de la surface intérieure en forme de plaque des éléments de plafond (3) reliés à la poutre à encliquetage (7, 7') sans précontrainte.

11. Plafond refroidi, suivant l'une quelconque des revendications 1 à 10, caractérisé en ce que plusieurs poutres à encliquetage (7) parallèles, placées l'une derrière l'autre et dans l'alignement l'une de l'autre, sont orientées et immobilisées par au moins une poutre longitudinale (8) commune.

12. Plafond refroidi, suivant la revendication 11, caractérisé en ce que les poutres longitudinales (8) sont elles-mêmes suspendues au plafond brut (1).

13. Plafond refroidi, suivant l'une quelconque des revendications 1 à 12, caractérisé en ce que les éléments de plafond (3) dont les bords longitudinaux (29, 29') sont juxtaposés l'un contre l'autre, formant une surface continue.

14. Plafond refroidi, suivant l'une quelconque des revendications 1 à 13, caractérisé en ce que les éléments de plafond (3) présentent des ouvertures de passage (31) dans leur partie (25) en forme de plaque.

15. Plafond refroidi, suivant la revendication 14, caractérisé en ce que les ouvertures de passage (31) forment de fines perforations.

16. Plafond refroidi, suivant l'une quelconque des revendications 1 à 15, caractérisé en ce que le système de tuyaux (32) est constitué par au moins un tube en matière plastique (33) présentant une surface de paroi extérieure élastique.

17. Plafond refroidi, suivant l'une quelconque des revendications 1 à 16, caractérisé en ce que le système de tuyaux (32) comporte des sections de pose (34) en forme de méandres, de spirales, d'hélices ou de parties doublées.

18. Plafond refroidi, suivant l'une quelconque des revendications 1 à 16, caractérisé en ce que les sections (34) sont rectilignes et s'étendent par-dessus un élément de plafond (3) ou plusieurs éléments de plafond (3) placés l'un derrière l'autre au même niveau, la branche d'arrivée et la branche de retour (35, 36) de chaque boucle posée étant sensiblement parallèles.

19. Plafond refroidi, suivant l'une quelconque des revendications 1 à 18, caractérisé en ce que les éléments de plafond (3) présentent, dans la zone des bords longitudinaux (29, 29'), des échancrures (37) qui reçoivent les parties coudées du système de tuyaux (32) et qui, quand ils sont en place, correspondent l'un à l'autre.
